# EUROPEAN PATENT APPLICATION

(11) **EP 2 075 780 A1**
(43) Date of publication of application: **01.07.2009**
(21) Application number: 08075704.0
(22) Date of filing: 14.08.2008
(51) Int. Cl.: G09B 5/04, G09B 5/06

(54) **Device for generating sound with image carrier and method**

(30) Priority: 19.12.2007 NL 1034842
(71) Applicant: Tele Merchandising International B.V., 3752 LV Bunschoten Spakenburg (NL); Edison International Concept & Agencies, 3752 LV Bunschoten (NL)
(72) Inventor: Luinstra, Jan Willem Johannes, 7383 AB Voorst (NL); Fennis, Petrus Franciscus Henricus Maria, 1213 CT Hilversum (NL)
(74) Representative: Land, Addick Adrianus Gosling

(57) **Abstract**

Device for reproducing sounds, comprising: a housing, a guide slot arranged in the housing for the purpose of guiding an image carrier therethrough, a sensor which is arranged in the housing and which is adapted to read a code arranged on the image carrier, and sound reproducing means.

The invention further relates to an image carrier evidently suitable for the above described device, and to a method for manufacturing such a device.

## Description

The present invention relates to a device for reproducing sounds, an image carrier evidently suitable for use with the device, and a method therefor.

People in general, and children in particular, like to collect objects. This passion for collecting can be used in effective manner for marketing purposes, thereby increasing for instance the sale of products with which collectable items are given away. The image carriers are particularly so-called trading cards, cards as component of a game, and cards for the purpose of promoting products in shops. For this purpose the image carriers are packaged with determined products during a promotion period, with the object of temporarily increasing sales of these products. The target group is mainly children who save the cards, assign a value thereto and trade the cards amongst themselves. The images are therefore aimed mainly at children, and come for instance from films, animated cartoons, popular music or other things which interest children.

Many of these collectable items are however perceived by savers as particularly attractive for only a determined period of time. Devisers of collectable objects are therefore always searching for innovative concepts which arouse the interest of collectors.

The present invention provides for this purpose a device for reproducing sounds, comprising:
- a housing;
- a guide slot arranged in the housing for the purpose of guiding an image carrier therethrough;
- a sensor which is arranged in the housing and which is adapted to read a code arranged on the image carrier; and
- sound reproducing means.

The sensor, which is arranged in the guide slot, is adapted to read the code arranged on the image carrier when the image carrier is moved through the guide slot by a user. Using sound reproducing means the device can then reproduce a sound linked to the code arranged on the image carrier. It is hereby possible to generate sounds using the device and an image carrier, and this will interest collectors.

According to a further preferred embodiment of the device, the image carrier comprises an image from a collection of images, whereby the image carrier - irrespective of the code arranged on the image carrier - is already a collectors item. The code is converted by the device into an audible signal preferably related to the image arranged on the image carrier. On a collectors card showing a national football team the code can thus be related to for instance the national anthem associated with this particular national team.

According to a further preferred embodiment, the sound reproducing means comprise:
- at least one loudspeaker arranged in the housing;
- a memory element arranged in the housing and adapted to store data of a sound signal to be reproduced; and
- electronics for reproducing the sound signal stored in the memory element subject to the code arranged on the image carrier.

Many sounds can be stored in the memory element. There is also the possibility of generating text, which is reproduced per country in the language of this country. Costs are thus saved, since one memory element is suitable for different countries. Only the code on the image carrier need be different, so that in the case of a Dutch image carrier an associated Dutch-language sound fragment is played, while in the case of a German image carrier the code refers to a German-language sound fragment stored in the same memory. The image carrier moreover carries only a code related to a sound signal stored in the memory element. The sound signal itself does not have to be stored on the image carrier, whereby the image carrier can for instance be made of paper. Image carriers can hereby be manufactured at low cost, while in combination with the device they can nevertheless give the user the experience of a sound signal via the loudspeaker arranged in the housing. Electronics are understood to mean electronic means, such as for instance an electronic circuit.

According to yet another preferred embodiment, the housing comprises a front surface, rear surface, lower surface, upper surface, a left-hand side surface and a right-hand side surface, and the front surface and rear surface are larger than the lower surface, the upper surface and the side surfaces. The housing preferably has a handheld format, for instance the size of a mobile telephone or a packet of cigarettes.

According to yet another preferred embodiment, the guide slot comprises a slot arranged in the side surface. The guide slot in the side surface is such that the image carrier is guided along the sensor in the correct position. The side surface is usually relatively narrow due to the small thickness of the housing, but is usually also relatively long, this being advantageous for guiding of the image carrier therethrough. The guide slot can thus taper to some extent for instance over at least a part of its length, whereby the image carrier can on the one hand be readily inserted into the wide opening part and can on the other be guided very precisely past the sensor in the narrowed part.

According to yet another preferred embodiment, there is arranged in the guide slot an on/off switch which sets the electronics temporarily into operation at the moment the image carrier is pushed along it. The on/off switch sets the electronics arranged in the device only temporarily into operation, thereby considerably lengthening the lifespan of the accumulator of the device also arranged in the housing. The accumulator can, if desired, comprise one or more replaceable batteries. The automatic on/off switch moreover prevents a user possibly forgetting to switch off the device after use. This makes the device particularly suitable for children.

Since the on/off switch must be arranged in the guide slot before the sensor in the guiding direction, it is also advantageous here for the guide slot to comprise some length. The arranging of the guide slot in the side surface is therefore often advantageous.

According to yet another preferred embodiment, the memory element is arranged removably in the housing, whereby other memory elements with a different language or sound can be applied in simple manner. One and the same device can hereby be adapted for use in different countries, or for use with different types of image card (such as football-related image cards, comic character-related image cards, pop idol-related image cards and so on).

According to yet another preferred embodiment, the code is a barcode. Barcodes are simple and inexpensive to arrange, are reliable and moreover provide sufficient unique code combinations to enable a distinction between different image cards.

In yet another preferred embodiment the device comprises a switch with which it is possible to switch between separate memories. On the basis of one image carrier with one code the device can in this way read different predetermined sound signals from the memory element in the diverse positions of the switch. If the image cards are for instance part of a question and answer game, a question can be reproduced in the first position and the answer to the question in the second position.

The invention further relates to an image carrier evidently suitable for the above described device, and to a method for manufacturing such a device.

Further advantages and features are described with reference to the accompanying figures, in which:

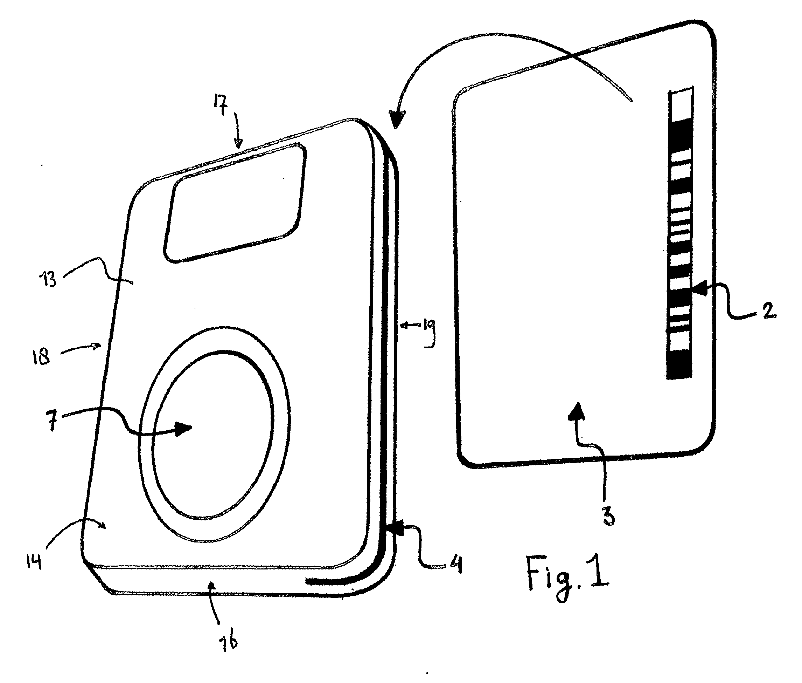

Figure 1 is a perspective view of a device and a separate image carrier;

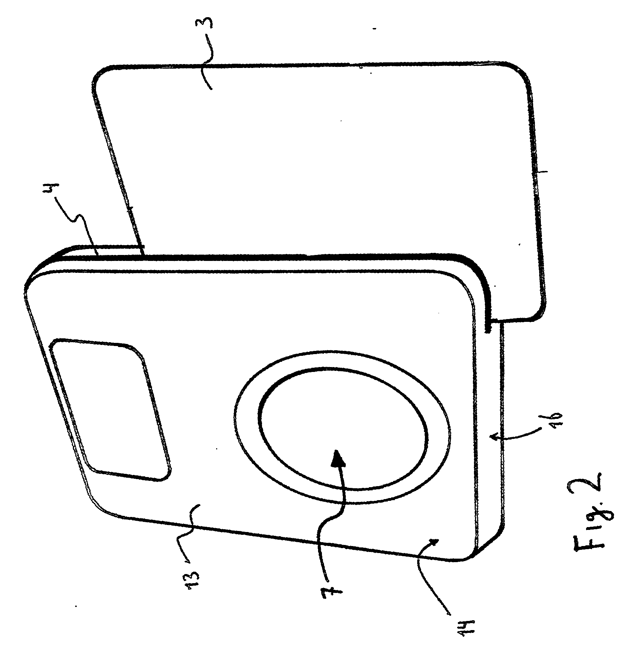

Figure 2 is a perspective view of a device in which an image carrier is arranged;

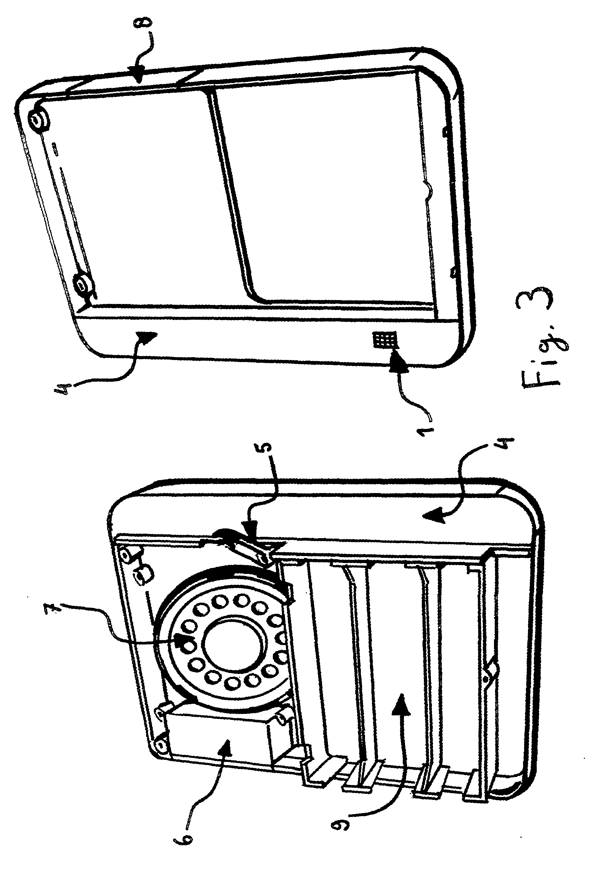

Figure 3 is a perspective view of the interior of a device; and

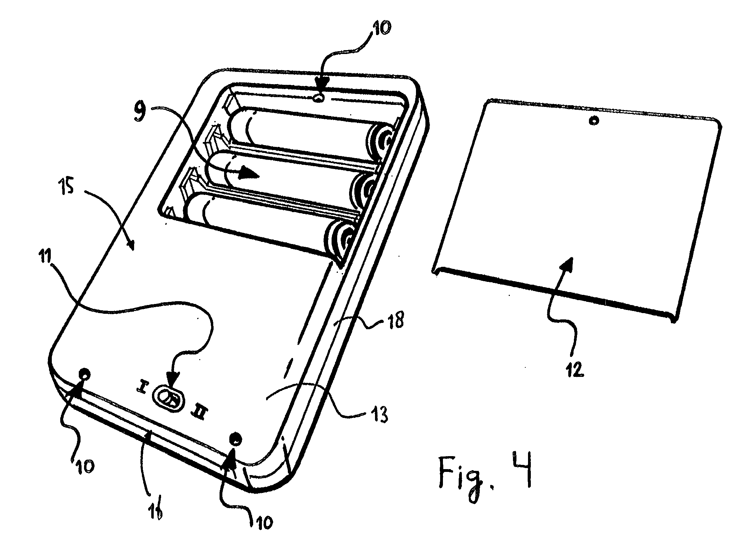

Figure 4 is a perspective view of the underside of a preferred embodiment of the device.

The device according to the present invention comprises a housing 13 provided with sound reproducing means and electronics. Arranged on the side surface is a guide slot 4 through which an image carrier 3 provided with a code 2 can be moved past a sensor 1.

During use the sensor 1 reads the code 2 on the underside of image carrier 3 when an image carrier 3 is moved through guide slot 4 past sensor 1. Situated on the upper side of this slot is an on/off switch 5 which sets the electronics temporarily into operation at the moment the image carrier 3 is moved therealong. The read code 1 determines which sound signal the electronics read from memory element 6. The read sound signal is immediately reproduced via loudspeaker 7. Memory element 6 is preferably removable from housing 13 so that memory element 6 can be replaced by another memory element 6 on which other sounds are stored, such as for instance in another language or related to another type of image carrier 3. Memory element 6 preferably comprises a memory chip on which about 30 minutes of sound are arranged. The chip comprises sufficient sound to be suitable for different countries and languages, whereby only code 2 on image carrier 3 has to be adapted per country, so saving costs. Recesses, such as a rectangular recess, are arranged in housing 13 for the purpose of receiving a memory element 8.

Guide slot 4 on the side of housing 13 of the device is for placing image carrier 3 in position in improved manner, and ensures that the code 2 arranged on image carrier 3 is guided closely and straight past the sensor. In this way the code 2 is read and transferred in correct and reliable manner to the electronics and the sound reproducing means, which comprise at least one loudspeaker 7 arranged in housing 13.

Situated on the underside of housing 13 of the device are a battery compartment 9, screws 10 for the purpose of making the electronics and the batteries accessible, and switch 11 for switching between the memories.

Many other variants of such a device are of course possible. Depending on the commercial applications, it is possible to opt for a simple embodiment as shown, which can for instance be given away during a promotional campaign, or conversely for a more expensive embodiment which is more robust and particularly suitable for collectors and the like.

The form of image carrier 3 can differ from the form shown and can be made from different appropriate materials such as cardboard and diverse types of plastic.

The device can likewise be supplied in many variants, depending on the commercial application thereof.

Although they show preferred embodiments of the invention, the above described embodiments are intended only to illustrate the present invention and not in any way to limit the specification of the invention. The scope of the invention is therefore defined solely by the following claims.

## Claims

1. Device for reproducing sounds, comprising:
- a housing (13);
- a guide slot (4) arranged in the housing (13) for the purpose of guiding an image carrier (3) therethrough;
- a sensor (1) which is arranged in the housing (13) and which is adapted to read a code (2) arranged on the image carrier (3); and
- sound reproducing means.

2. Device as claimed in claim 1, wherein the image carrier (3) comprises an image from a collection of images.

3. Device as claimed in claim 1 or 2, wherein the sound reproducing means comprise:
- at least one loudspeaker (7) arranged in the housing (13);
- a memory element (6) arranged in the housing (13) and adapted to store data of a sound signal to be reproduced; and
- electronics for reproducing a sound signal stored in the memory element (6) subject to the code (2) arranged on the image carrier (3).

4. Device as claimed in any of the foregoing claims, wherein the housing (13) comprises a front surface (14), rear surface (15), lower surface (16), upper surface (17), a left-hand side surface (18) and a right-hand side surface (19), and wherein the front surface (14) and rear surface (15) are larger than the lower surface (16), the upper surface (17) and the side surfaces (18, 19).

5. Device as claimed in any of the foregoing claims, wherein the guide slot (4) comprises a slot arranged in the side surface (18, 19).

6. Device as claimed in any of the foregoing claims, wherein there is arranged in the guide slot (4) an on/off switch (5) which sets the electronics temporarily into operation at the moment the image carrier (3) is pushed along it.

7. Device as claimed in any of the foregoing claims, wherein the memory element (6) is arranged removably in the housing (13).

8. Device as claimed in any of the foregoing claims, wherein the code (2) is a barcode.

9. Device as claimed in any of the foregoing claims, wherein the device comprises a switch (11) for the purpose of switching between separate memories.

10. Image carrier (3), evidently suitable for a device as claimed in any of the claims 1-9.

11. Method for manufacturing a device as claimed in any of the claims 1-9.
